# EUROPEAN PATENT SPECIFICATION

(11) **EP 2 193 049 B1**
(45) Date of publication and mention of the grant of the patent: **14.09.2011**
(21) Application number: 07818808.3
(22) Date of filing: 05.10.2007
(51) Int. Cl.: B60R 11/02

(54) **DOCKING APPARATUS FOR PORTABLE DEVICE**
ANDOCKVORRICHTUNG FÜR EINE TRAGBARE VORRICHTUNG
APPAREIL D'ATTELAGE POUR DISPOSITIF PORTABLE

(43) Date of publication of application: 09.06.2010
(73) Proprietor: TomTom International B.V., 1017 CT Amsterdam (NL)
(72) Inventor: RIDDIFORD, Martin, London SE21 7DF (GB)
(74) Representative: Moore, Nicholas
(86) International application number: PCT/EP2007/008734
(87) International publication number: WO 2009/043367

(56) References cited:
- EP-A- 0 822 693
- EP-A- 0 950 572
- WO-A-01/61875
- WO-A-2007/109703
- DE-A1- 4 107 995
- DE-A1- 10 202 061
- DE-A1- 19 817 345
- DE-A1- 19 951 968
- DE-A1-102006 008 420
- US-A1- 2007 171 316
- US-B1- 6 692 053

## Description

This invention is concerned with a docking apparatus for a portable device, preferably a portable electric or electronic device requiring a source of power or other electric or electronic signals, and in particular, but not exclusively, a portable navigation device (PND).

### Background

Docking apparatuses for electronic devices are well known. An example of such a docking apparatus is disclosed by document US-A-2007/0171316. The reader will be aware that docking stations for laptop computers are available and have features which cooperate in some way with corresponding and suitably designed features of the laptop itself. Specifically, the docking station will inevitably be provided with a power and/or data transfer component, typically in the form of a connector, which is received in a corresponding socket within the laptop primarily to provide a source of power thereto, and optionally to pass other electric and electronic signals, such as video signals, data, USB signals and the like to and from the laptop. Aside from this basic requirement, there are few other requirements for the docking station, except that is should support the weight of the laptop.

In the case of portable navigation devices, which are most commonly used as in-car devices, the provision of a docking station is a more complex proposition, particularly as the majority of vehicle manufacturers are highly sensitive about alterations to the appearance of the cabin, particularly any such alterations which might be obtrusive or worse, unsafe either under normal driving conditions or in an accident.

Semi-integrated docking apparatuses for the in-car market have therefore been proposed. However, such propositions have in the past foundered on account of additional development costs required on the part of the vehicle manufacturer, and potential incompatibility issues between the electric and electronic signals commonly routed within vehicles and those required for or provided by in-car PNDs, and the connectors commonly provided on such devices and those which might be proposed by the vehicle manufacturers. Notwithstanding these difficulties, the rapid and almost global adoption of PNDs has forced vehicle manufacturers to act.

Initial attempts by the automotive industry to adapt to the PND market have proved relatively unsuccessful, due mainly to the need for a reliable physical connection and the hugely differing development and life cycles between vehicle manufacturers and the consumer electronics industry. Additionally, there is a threat that national governments will introduce legislation that prevents the currently used PND "cradles". The current cradles are typically provided with a suction disc for attachment to the inner surface of the windscreen of the car, and a mounting part with features which cooperate with corresponding features provided on the PND unit such that the pair can be releasably connected together. Inevitably, the attachment of the these often bulky cradles to the windscreen, and the fact that such devices necessarily mount the PNDs in the cabin space of the vehicle away from the windscreen is distracting and in certain positions, can reduce driver and/or passenger visibility.

A further consideration is one of security. PND adoption has become so widespread that thieves are now targeting vehicles in which a suction disc mark can be seen on the inner surface of the windscreen, regardless of whether the cradle remains attached to the windscreen inside the vehicle.

A further disadvantage with the current situation is that PNDs are currently commonly provided with cigarette lighter adapters (CLA) to provide a source of power. The cable emanating from the CLA is unsightly, but a necessity for medium to long journeys and frequent PND usage. A majority of potential navigation device customers see this as a drawback of PNDs and a reason for considering a semi- or fully-integrated navigation system.

At the time of this application, vehicle manufacturers have worked with PND suppliers to develop dashboard-embedded cradles that enable varying levels of integration.

A primary object of this invention therefore is to provide a docking apparatus which:
- reduces the product development time of vehicle manufacturers;
- is safe, functional, and offers reliable and sound physical and electrical connection with the PND attached thereto;
- is simple and quick to operate, in terms of PND connection and disconnection, and
- is concealable after PND disconnection, in which position it provides no indication to a potential thief that a PND device is owned by the vehicle owner.

### Brief Summary of the Invention

According to the invention there is provided a docking apparatus for a portable device, said docking apparatus comprising at least a base and a mounting part which is connected to the base, wherein
the mounting part is pivotally mounted within the base and consists of at least a cover part which in a first position lies substantially flush with the base, said cover part capable of being pivoted to a second position wherein part of the cover part extends substantially upwardly from the docking apparatus, said pivotal motion also revealing a fin part attached to the underside of said cover part, and wherein at least one of
- the part of the cover part underside, and
- the fin part
which are exposed in the second position is provided with one or more cooperating connection features which cooperate with corresponding features provided on the portable device to facilitate the connection of the latter to the former characterized in that said fin part in said second position lies substantially flush with said base.

Preferably, the base and the mounting part are substantially circular in cross-section.

Further preferably, at least one of the mounting part and the base includes push-release means which in their locked condition secure the mounting part in the first position, and in their released condition allow pivotal movement of said mounting part.

Further preferably, at least one of the base and the fin part of the mounting part include cooperating locking means which facilitate the locking of the fin part to the base thus securing the mounting part in the second position.

In an modified aspect of the invention, the docking apparatus includes a base, a mounting part, and an intermediate part within which the mounting part is pivotally mounted, said intermediate part being secured to the base in a push-fit manner. In this modified aspect, it is preferred that the at least one of the mounting part and the intermediate part includes push-release means which in their locked condition secure the mounting part in the first position, and in their released condition allow pivotal movement of said mounting part. Additionally, further preferably, at least one of the base and the fin part of the mounting part include cooperating locking means which facilitate the locking of the fin part to the intermediate part thus securing the mounting part in the second position.

Preferably, the mounting part is capable of both pivoting and rotating, such rotational movement being achieved either by being rotationally mounted in either the base or the intermediate part if provided, or alternatively by means of the intermediate part being rotationally mounted in the base part.

Most preferably, the cooperating connection features are provided on the underside of the cover part of the mounting part, such allowing the portable device to be slidingly connected to said cover part when disposed in an upward condition when the mounting part is in the second position.

Most preferably, the fin part is provided with at least an aperture through which either a connecting cable may pass, or by means of which an electrical connection to the portable device may be achieved. In this latter embodiment, it is preferred that the fin part includes electrical connection means, such being preferably disposed proximately the lower reaches of the cooperating connection features on the underside of the cover part such that complete sliding connection of the portable device thereto simultaneously achieves electrical connection between the portable device and said electrical connection means.

In a particularly preferred embodiment, the mounting and electrical connection of a portable device is achieved through an intermediate adapter component which include connection features adapted to cooperate with the connection features provided on the underside of the cover part or the fin part of the mounting part as the case may be, and additionally include at least one of
- Different connection features which are capable of cooperating with corresponding connection features of a portable device which are unsuited for the connection features of the underside of the cover part or the fin part,
- electrical connection means adapted to connect with the electrical connection means provided on the fin part which either mimic such connection means or adapt them to a different type of connection means which correspond to those of a particular portable device.

In a most preferred embodiment, the electrical connection includes facility for an antenna signal and/or audio signal to be transmitted therethrough. With such a feature, the driver of the vehicle using a suitable specified PND can enjoy navigation commands, hands mobile telecommunications calls, and mp3 playback over the vehicle manufacturer-installed audio system of the vehicle.

Accordingly, the docking apparatus of the present invention provides an alternative to the standard windscreen-affixed cradle mounting currently employed for portable navigation devices, and thus overcomes the various disadvantages associated therewith.

### Description of the Drawings

Figures 1A, B, C show a perspective view of a car dashboard, and schematic views of the docking apparatus respectively,
Figures 2 shows a perspective view of the underside of the docking apparatus and the manner of electrical connection therewith,
Figures 3A, B show a schematic perspective view of the docking apparatus in-situ, and a sectional view therethrough,
Figures 4A, B C show respectively perspective and sectional views of the pivoting movement of the mounting part of the docking apparatus, and enlarged schematic views of a cam retaining cam mechanism provided on the mounting part,
Figures 5A, B, C show respectively perspective and sectional views of the docking apparatus with the mounting part retained in the second position, and an enlarged view of a locking mechanism provided on a fin part of the docking apparatus,
Figure 6 shows a perspective view of the portable device secured to the docking apparatus,
Figures 7A, B, C show respectively a perspective view the mounting of a portable device to the docking apparatus when an adapter is employed, a perspective view of an alternative type of adapter, and a sectional view of the connection of a portable device using such alternative adapter,
Figure 8A, B, C, D respectively show a perspective view of an adapter, a sectional view of the docking apparatus with said adapter remaining connected thereto, a perspective view of an alternative larger adapter, and a sectional view of said larger adapter connected to the docking apparatus in its second open condition, and
Figure 9 shows a perspective view of a docking apparatus, an adapter and a PND prior to connection and a cable provided through the docking apparatus.

### Detailed Description

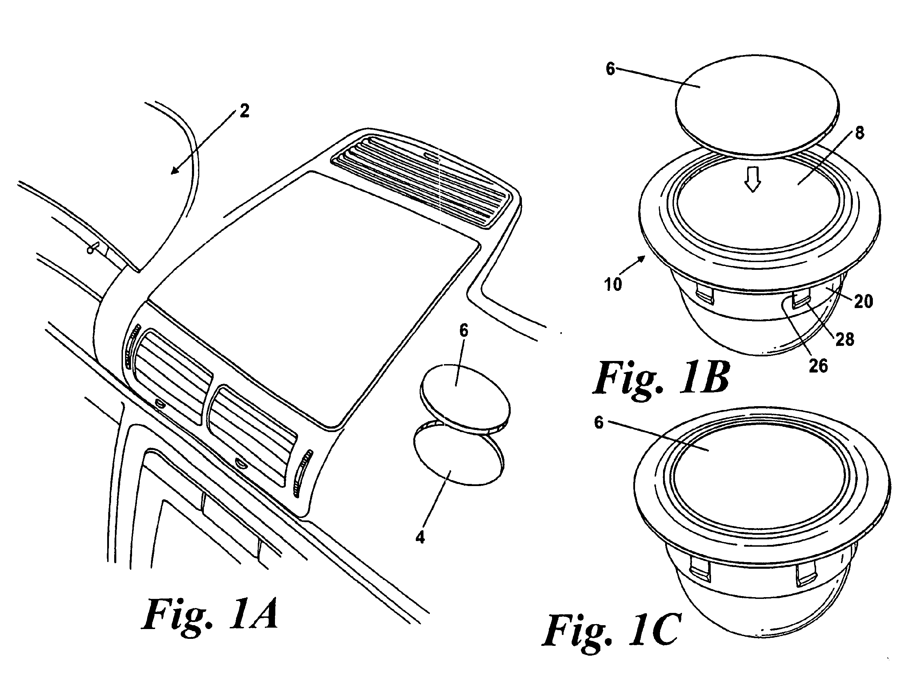

Referring firstly to Figure 1A, there is shown a vehicle dashboard 2 on one side of which may be cut or provided an aperture 4 thus producing a disc 6 of dashboard material which may be trimmed and secured to an upper surface 8 of a docking apparatus indicated generally at 10. In this manner, the docking apparatus can substantially blend in with the dashboard once it is secured therein as hereinafter described.

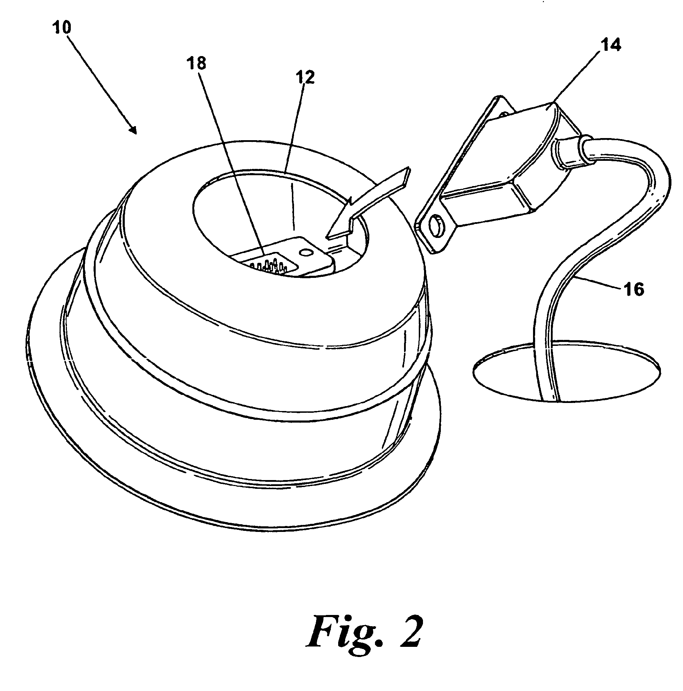

In Figure 2, the underside of the docking apparatus 10 is shown, and in particular is provided with an aperture 12 through which an electrical connector 14, provided within the dashboard and wired at 16 to the internal electrical and electronic systems of the vehicle, can pass to facilitate connection thereof to a corresponding connector 18 provided within the docking apparatus.

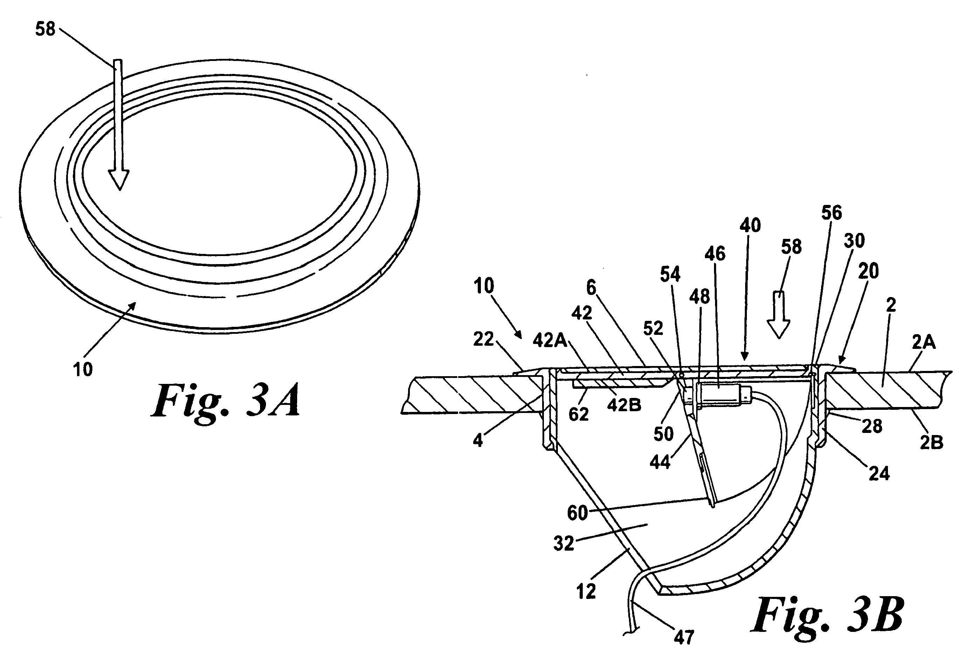

Referring now to figures 3A, 3B, the docking apparatus 10 comprises a base 20 consisting of an annular peripheral lip 22 from the inner edge of which depends a skirt 24 which together ensure that the base can be securely inserted in push-fit manner into the aperture 4 defined in the dashboard 2, and is prevented from falling therethrough by said lip which is supported by an upper surface 2A of the dashboard. Referring back to Figure 1B, it can be seen that the base 20 is provided with deflectable tabs 26 having hook formations 28 which lock behind a lower surface 2B of said dashboard.

In the described embodiment, an intermediate component 30 is provided within the base 20 and is secured therein in push-fit manner. Said intermediate component is substantially hemi-spherical in shape defining an inner cavity 32 therein to which access is had through the aperture 12. Within the intermediate component is provided a mounting part indicated generally at 40 which comprises a cover part 42 having an upper surface 42A to which the trimmed disc 6 is secured, and a lower surface 42B from which a fin part 44 depends. Said fin part may be suitably attached to said cover part, for example by being integrally formed therewith. Provided on one side of the fin part 44 is a connector 46, which may be for example a commonly known "D-type" or other suitable connector, which may be simply mounted or adhered in place, or alternatively connected to a corresponding connector, possibly provided in a mounted printed circuitboard 48. The supply of electric power, or other electric or electronic signals to said connector is provided through cable 47. An aperture 50 provided in the fin part 44 exposes a further connector 52 by means of which electric/electronic connection may be achieved with the portable device.

In accordance with the invention, the mounting part 40 is pivotally mounted about an axis indicated at 54, in this embodiment, in the intermediate part 30, although it should be mentioned that the intermediate component is optional, and the mounting part may be directly pivotally mounted within the base 20.

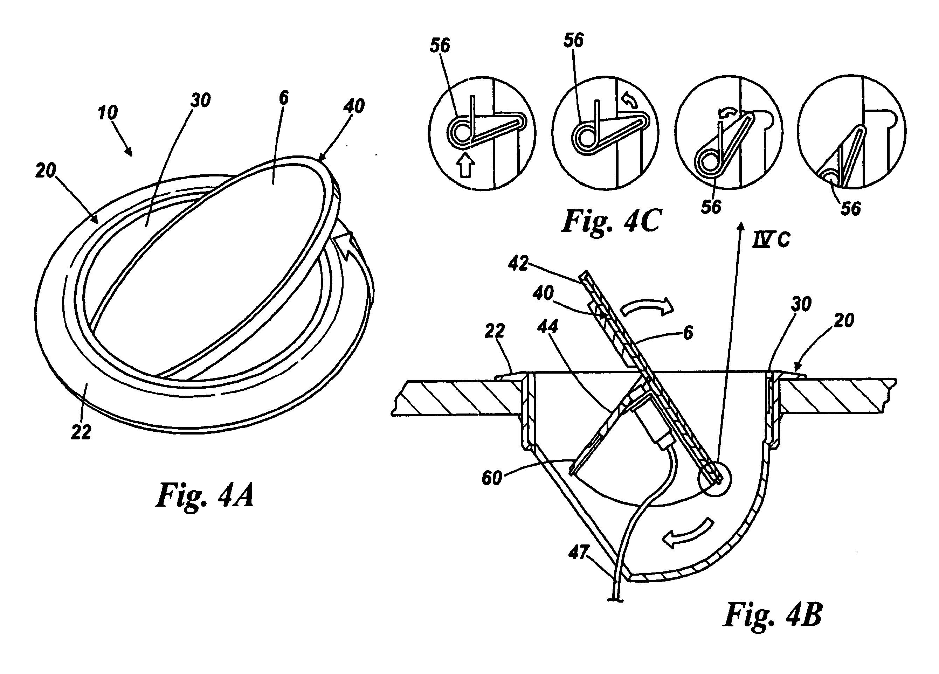

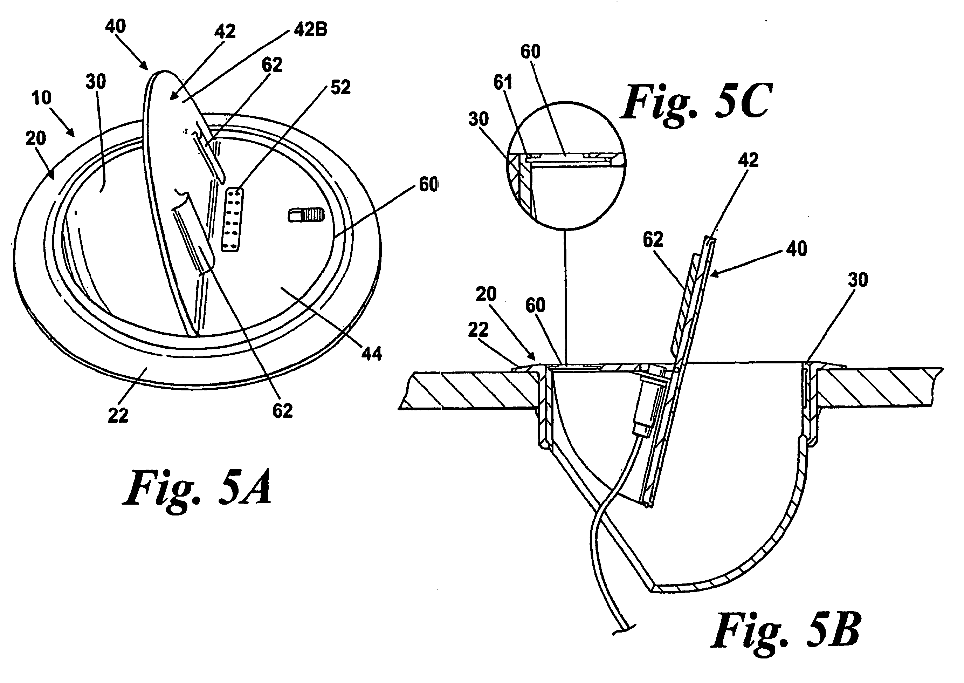

As previously mentioned, the mounting part can adopt two positions, a first of which is shown in Figure 3B. It is retained in this position by means of a push-cam mechanism shown in greater detail in Figure 4C. To operate the docking apparatus such that the connector 52 becomes exposed, a user applies downward pressure as indicated by arrows 58 to release the push-cam mechanism, whereupon, the cover part, fin part, and associated connectors can pivot within the intermediate component (or base) until the fin comes into substantially co-planar relationship with the lip 22 of the base 20. The pivoting motion and the exposure of the connectors is clearly shown in Figures 4A, B, and the motion of a typical push-cam mechanism, known and easily implementible by one skilled in the art, is clearly shown in Figure 4C. Again with reference to figure 3B, a simple sliding lock mechanism 60 is provided at the remote end of the fin part 44 to enable the releasable retention of the mounting part 40 in its second position, shown in Figures 5A, B, C. Furthermore, the reader will note the provision of connection features 62 such as ribs, grooves, channels, or the like on the underside 42B of the cover part 42. It is to be mentioned that any type of connection feature may be provided, but in this embodiment, and as can more clearly be seen in Figure 5A, the connection features 62 are in the form of a pair of substantially parallel guide rails which cooperate with a pair of correspondingly shaped grooves on the rear surface of a PND or other portable device. It can also be seen from Figure 5A that the sliding lock 60 is clearly accessible to a user, whereby the mounting part may be secured in the second "open" position in which a portion of the cover part 42 extends upwardly from the docking apparatus 10 at a slight angle to the vertical such that any device mounted thereon is also appropriately inclined for ease of view or use, particularly when the portable device includes a visual display. The position and exposure of the connector 52 is to be noted, proximate the lower reaches of the connection features 62, such that sliding fitment of a portable device thereon automatically aligns the connector 52 with the corresponding connector (not shown) provided on the base of the portable device, both connectors ultimately mating when the portable device is completely and properly mounted on said cover part 42. As may also be seen in the enlarged view in Figure 5C, the lock 60 consists of a simple slider which can be moved back and forth, in one of which positions the slider engages within a suitable detent 61 provided in the intermediate component 30 to prevent further pivoting motion of the mounting part 20 and to lock said mounting part in the second, "open" position.

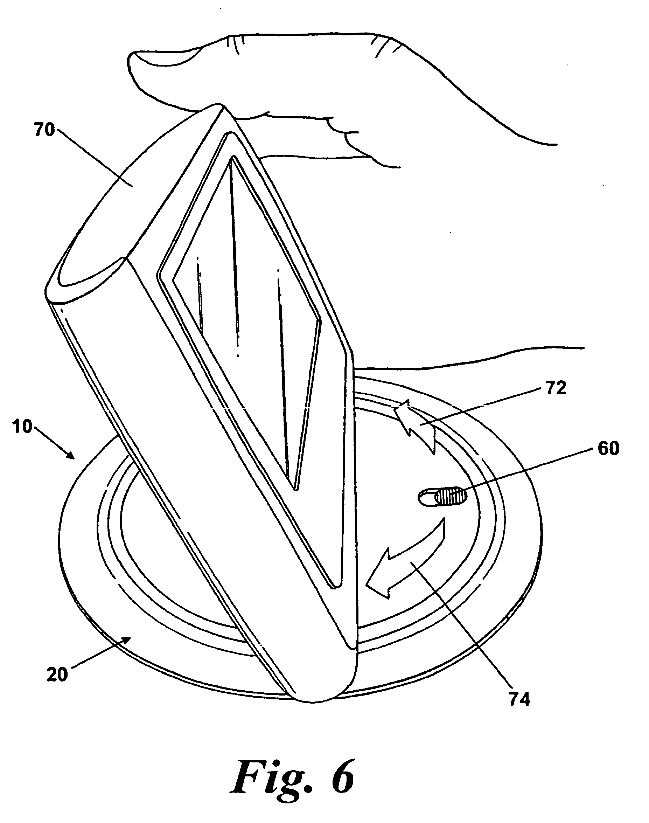

Figure 6 clearly shows a portable navigation device 70 mounted in place on the docking apparatus 10. An optional feature which may be incorporated into the docking apparatus is the facility for the mounting part to swivel as indicated by arrows 72, 74, further optionally while the lock is in a position which secures the cover part 42 to the intermediate component or the base as the case may be.

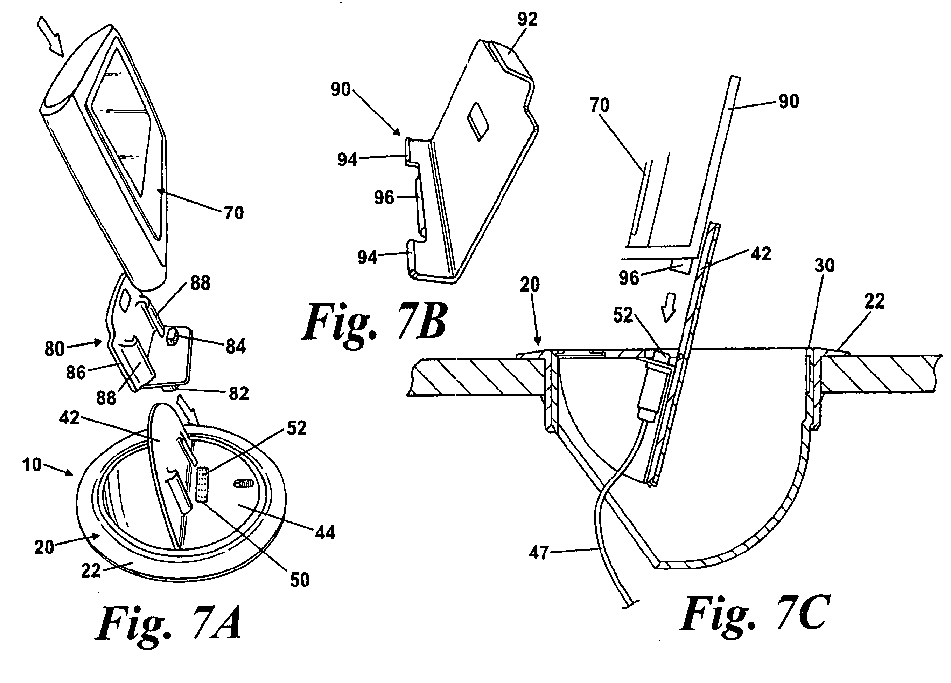

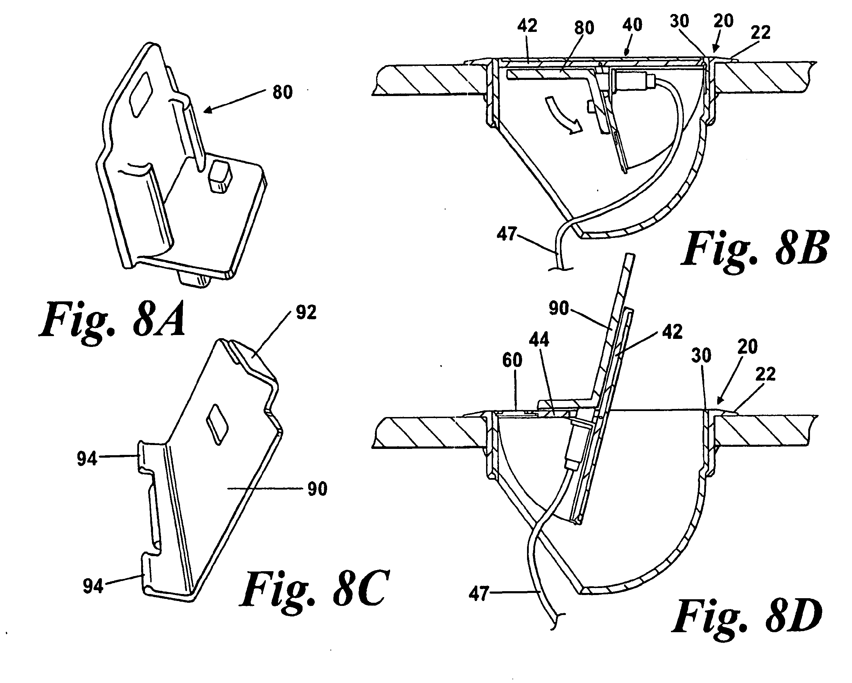

In Figures 7A, B, C, there is provided an alternative arrangement wherein an adapter 80 is provided having a first connector 82 complementary to the connector 52 exposed through the aperture to the underside of fin 44 of the docking apparatus 10, and a second connector 84 which is complementary to the connector (not shown) on the underside of the portable device 70. Additionally, connection means 86 are provided to the rear of the adapter 80 which are complementary to the connection features 62 provided on the exposed surface of the cover part 42, and suitable connection features 88 are provided on the alternate face which allow for the sliding connection of the portable device 70, again included corresponding and complementary connection features (not shown) in its rear surface. The adapter may either be of the type shown in Figure 7A which is sufficiently discreet to be fitted to the upstanding cover part 42 and to complete an electrical connection between the connector 82 and the connector 52 without impeding the pivotal movement of the mounting part, as shown in Figures 8A, 8B, or the adapter may be of an alternative type 90 shown in Figure 7B and 8C, which includes tabs 92, 94 allowing for push- as opposed to sliding-fit of a portable device, and a connector 96 complementary to the connector 52. However, in analogous manner to the adapter 80, sliding fit of adapter 90 to the cover part 42 is still required for respective connection of connectors 96 and 52, as shown in Figure 7C. As can be seen in Figure 8D, the adapter is too large to be concealed within the docking apparatus.

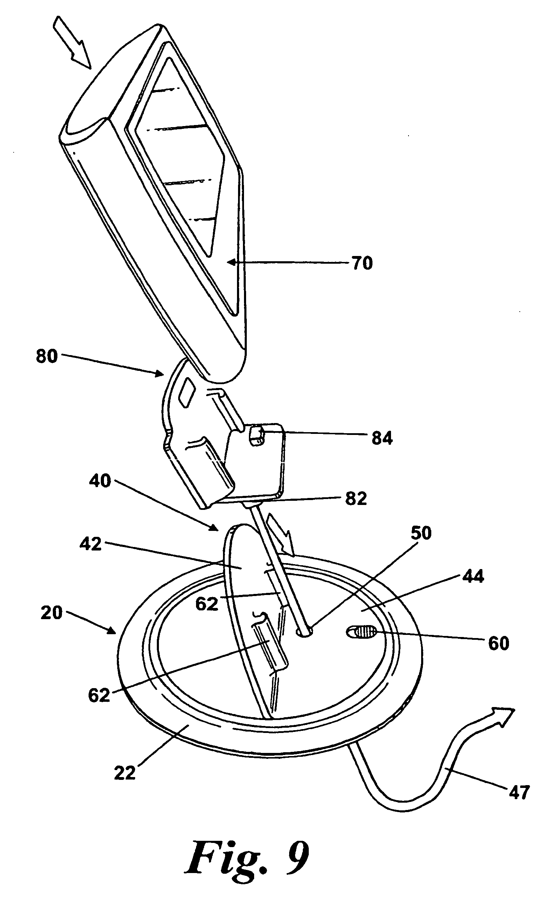

Finally, referring to Figure 9, in an alternative aspect of the invention, the fin 44 of the mounting part is merely provided with an aperture 50 through which the cable 47 may pass, the connector 46 at the end thereof merely being manually attached to the corresponding and complementary connector 82 of the adapter 80.

## Claims

1. A docking apparatus (10) for a portable device (70), said docking apparatus comprising at least a base (20) and a mounting part (40) which is connected to the base, wherein
the mounting part (40) is pivotally mounted (54) within the base (20) and consists of at least a cover part (42) which in a first position lies substantially flush with the base (20), said cover part (42) capable of being pivoted to a second position wherein part of the cover part (42) extends substantially upwardly from the docking apparatus (10), said pivotal motion also revealing a fin part (44) attached to the underside of said cover part (42), and wherein at least one of
- the part of the cover part (42) underside, and
- the fin part (44)
which are exposed in the second position is provided with one or more cooperating connection features (62) which cooperate with corresponding features provided on the portable device (70) to facilitate the connection of the latter to the former **characterized in that**
said fin part (44) in said second position lies substantially flush with said base (20).

2. A docking apparatus according to claim 1 wherein the base (20) is additionally provided with a partial or continuous peripheral lip (22) to the inside of which depends a skirt (24) capable of being inserted through an aperture (4) in a mounting surface (2) thereby securing the base to said surface (2), said lip (22) preventing the base (20) from falling through said aperture (4).

3. A docking apparatus (10) according to any preceding claim wherein the base (20) and the mounting part (40) are substantially circular in cross-section.

4. A docking apparatus (10) according to any preceding claim wherein at least one of the mounting part (40) and the base (20) includes push-release means (56) which in their locked condition secure the mounting part (40) in the first position, and in their released condition allow pivotal movement of said mounting part (40).

5. A docking apparatus (10) according to any preceding claim wherein the base (20) and the fin part (44) include cooperating locking means (60, 61) which facilitate the locking of the fin part (44) to the base to secure the mounting part (40) in the second position.

6. A docking apparatus (10) according to any preceding claim wherein an intermediate base part (30) is provided within which the mounting part (40) is pivotally mounted, said intermediate base part being secured to the base (20) in a push-fit manner.

7. A docking apparatus (10) according to claim 6 wherein at least one of the mounting part (40) and the intermediate base part (30) includes push-release means (56) which in their locked condition secure the mounting part (40) in the first position, and in their released condition allow pivotal movement of said mounting part (40) relative to said intermediate base part (30).

8. A docking apparatus (10) according to claim 6 or 7 wherein at least one of the intermediate base part (30) and the fin part (44) of the mounting part (40) include cooperating locking means (60, 61) which facilitate the locking of the fin part (44) to the intermediate base part (30) thus securing the mounting part (40) in the second position.

9. A docking apparatus (10) according to any of claims 6-8 wherein the mounting part (40) is both pivotally and rotationally mounted in said intermediate base part (30).

10. A docking apparatus (10) according to any of claims 1-5 wherein the mounting part (40) is both pivotally and rotationally mounted in said base part (20).

11. A docking apparatus (10) according to any preceding claim wherein cooperating connection features (62) are provided on the underside of the cover part (42) of the mounting part (40), such allowing the portable device (70) to be slidingly connected to said cover part (42) when disposed in an upward condition when the mounting part (40) is in the second position.

12. A docking apparatus (10) according to claim 11 wherein the fin part (44) is provided with at least an aperture (50) and an electrical connector (46) disposed behind said aperture (50) such that sliding connection of the portable device (70) thereto automatically align the electrical connector (46) with a corresponding connector provided on the portable device (70) and ultimately achieves sound electrical connection therebetween.

13. A docking apparatus (10) according to any preceding claim which includes voltage conversion electronics.

14. A docking apparatus (10) according to any preceding claim which further includes a data bus connector.

15. A docking apparatus (10) according to claim 14 wherein the bus connector is a universal serial bus (USB) connector.

16. A docking apparatus (10) according to any preceding claim wherein the cooperating connection features (62) consist of guide rails.

## Patentansprüche

1. Andockvorrichtung (10) für ein tragbares Gerät (70), wobei die genannte Andockvorrichtung wenigstens eine Basis (20) und einen mit der Basis verbundenen Montageteil (40) umfasst, wobei
der Montageteil (40) schwenkbar in der Basis (20) montiert (54) ist und aus wenigstens einem Deckelteil (42) besteht, der in einer ersten Position im Wesentlichen bündig mit der Basis (20) liegt, wobei der genannte Deckelteil (42) in eine zweite Position geschwenkt werden kann, in der ein Teil des Deckelteils (42) von der Andockvorrichtung (10) im Wesentlichen nach oben verläuft, wobei durch die genannte Schwenkbewegung auch ein Rippenteil (44) aufgedeckt wird, der an der Unterseite des genannten Deckelteils (42) angebracht ist, und wobei
- der Teil der Unterseite des Deckelteils (42) und/oder
- der Rippenteil (44)
die in der zweiten Position exponiert sind, mit einem oder mehreren zusammenwirkenden Verbindungsmerkmalen (62) versehen sind, die mit entsprechenden Merkmalen an dem tragbaren Gerät (70) zusammenwirken, um die Verbindung des Letzteren mit dem Ersteren zu erleichtern, **dadurch gekennzeichnet, dass**
der genannte Rippenteil (44) in der genannten zweiten Position im Wesentlichen bündig mit der genannten Basis (20) liegt.

2. Andockvorrichtung nach Anspruch 1, wobei die Basis (20) zusätzlich mit einer teilweisen oder kontinuierlichen Umfangslippe (22) versehen ist, an deren Innenseite eine Schürze (24) herabhängt, die durch eine Öffnung (4) in einer Montagefläche (2) gesteckt werden kann, um **dadurch** die Basis an der genannten Oberfläche (2) zu befestigen, wobei die genannte Lippe (22) verhindert, dass die Basis (20) durch die genannte Öffnung (4) fällt.

3. Andockvorrichtung (10) nach einem der vorherigen Ansprüche, wobei die Basis (20) und der Montageteil (40) einen im Wesentlichen kreisförmigen Querschnitt haben.

4. Andockvorrichtung (10) nach einem der vorherigen Ansprüche, wobei der Montageteil (40) und/oder die Basis (20) ein Drucktastenauslösemittel (56) aufweist/- en, das in seinem arretierten Zustand den Montageteil (40) in der ersten Position befestigt und in seinem gelösten Zustand eine Schwenkbewegung des genannten Montageteils (40) zulässt.

5. Andockvorrichtung (10) nach einem der vorherigen Ansprüche, wobei die Basis (20) und der Rippenteil (44) zusammenwirkende Arretiermittel (60, 61) aufweisen, die das Arretieren des Rippenteils (44) an der Basis erleichtern, um den Montageteil (40) in der zweiten Position zu befestigen.

6. Andockvorrichtung (10) nach einem der vorherigen Ansprüche, wobei ein Zwischenbasisteil (30) vorgesehen ist, in dem der Montageteil (40) schwenkbar montiert ist, wobei der genannte Zwischenbasisteil durch Einschieben an der Basis (20) befestigt wird.

7. Andockvorrichtung (10) nach Anspruch 6 oder 7, wobei der Montageteil (40) und/oder der Zwischenbasisteil (30) Drucktastenlösemittel (56) aufweist/-en, die in ihrem arretierten Zustand den Montageteil (40) in der ersten Position befestigen und in ihrem gelösten Zustand eine Schwenkbewegung des genannten Montageteils (40) relativ zu dem genannten Zwischenbasisteil (30) zulassen.

8. Andockvorrichtung (10) nach Anspruch 6 oder 7, wobei der Zwischenbasisteil (30) und/oder der Rippenteil (44) des Montageteils (40) zusammenwirkende Arretiermittel (60, 61) aufweisen, die das Arretieren des Rippenteils (44) am Zwischenbasisteil (30) erleichtern, so dass der Montageteil (40) in der zweiten Position befestigt wird.

9. Andockvorrichtung (10) nach einem der Ansprüche 6 - 8, wobei der Montageteil (40) schwenkbar und drehbar in dem genannten Zwischenbasisteil (30) montiert ist.

10. Andockvorrichtung (10) nach einem der Ansprüche 1- 5, wobei der Montageteil (40) schwenkbar und drehbar in dem genannten Basisteil (20) montiert ist.

11. Andockvorrichtung (10) nach einem der vorherigen Ansprüche, wobei zusammenwirkende Verbindungsmerkmale (62) an der Unterseite des Deckelteils (42) des Montageteils (40) vorgesehen sind, so dass das tragbare Gerät (70) durch Schieben mit dem genannten Deckelteil (42) verbunden werden kann, wenn er in einem aufwärtigen Zustand angeordnet ist, wenn sich der Montageteil (40) in der zweiten Position befindet.

12. Andockvorrichtung nach Anspruch 11, wobei der Rippenteil (44) mit wenigstens einer Öffnung (50) versehen und ein elektrischer Verbinder (46) so hinter der genannten Öffnung (50) angeordnet ist, dass durch eine Schiebeverbindung des tragbaren Gerätes (70) damit der elektrische Verbinder (46) automatisch auf einen entsprechenden Verbinder ausgerichtet wird, der an dem tragbaren Gerät (70) vorgesehen ist und schließlich eine gute elektrische Verbindung dazwischen erzielt.

13. Andockvorrichtung (10) nach einem der vorherigen Ansprüche, die Spannungsumwandlungselektronik beinhaltet.

14. Andockvorrichtung (10) nach einem der vorherigen Ansprüche, die ferner einen Datenbusverbinder beinhaltet.

15. Andockvorrichtung nach Anspruch 14, wobei der Busverbinder ein USB-(Universal Serial Bus)-Verbinder ist.

16. Andockvorrichtung (10) nach einem der vorherigen Ansprüche, wobei die zusammenwirkenden Verbindungsmerkmale (62) aus Führungsschienen bestehen.

## Revendications

1. Appareil d'accueil (10) pour un dispositif portable (70), ledit appareil d'accueil comportant au moins un socle (20) et une partie montage (40) laquelle est raccordée au socle, cas dans lequel
la partie montage (40) est montée de façon pivotante (54) au sein du socle (20) et se compose d'au moins une partie couvercle (42) qui, dans une première position, est sensiblement de niveau avec le socle (20), ladite partie couvercle (42) étant apte à être pivotée vers une deuxième position cas dans lequel une section de la partie couvercle (42) s'étend sensiblement vers le haut à partir de l'appareil d'accueil (10), ledit mouvement de pivotement révélant également une partie volet (44) qui est attachée à la face inférieure de ladite partie couvercle (42), et cas dans lequel au moins l'un des postes suivants, à savoir
- la section de la face inférieure de la partie couvercle (42), et
- la partie volet (44)
lesquels sont exposés dans la deuxième position, est pourvu d'un ou de plusieurs éléments de raccordement (62) en coopération les uns avec les autres, qui agissent en coopération avec des éléments correspondants prévus sur le dispositif portable (70) afin de faciliter le raccordement de ce dernier au premier poste, **caractérisé en ce que** ladite partie volet (44), dans la deuxième position, est sensiblement de niveau avec ledit socle (20).

2. Appareil d'accueil selon la revendication 1, le socle (20) étant en outre muni d'une lèvre périphérique partielle ou continue (22) alors que de la face interne de celle-ci dépend un rebord (24) qui est apte à être introduit à travers une ouverture (4) ménagée dans une surface de montage (2), ce qui permet par conséquent d'assujettir le socle à ladite surface (2), ladite lèvre (22) empêchant le socle (20) de tomber à travers ladite ouverture (4).

3. Appareil d'accueil (10) selon l'une quelconque des revendications précédentes, le socle (20) et la partie montage (40) ayant une coupe transversale sensiblement circulaire.

4. Appareil d'accueil (10) selon l'une quelconque des revendications précédentes, au moins l'un des postes suivants à savoir la partie montage (40) et le socle (20) comportant des moyens à action de poussée-déblocage (56) qui dans leur état verrouillé assujettissent la partie montage (40) dans la première position, et dans leur état débloqué permettent un mouvement de pivotement de ladite partie montage (40).

5. Appareil d'accueil (10) selon l'une quelconque des revendications précédentes, le socle (20) et la partie volet (44) englobant des moyens de verrouillage (60, 61) en coopération les uns avec les autres, qui facilitent le verrouillage de la partie volet (44) au socle afin d'assujettir la partie montage (40) dans la deuxième position.

6. Appareil d'accueil (10) selon l'une quelconque des revendications précédentes, une section intermédiaire du socle (30) étant prévue au sein de laquelle la partie montage (40) est montée de façon pivotante, ladite portion intermédiaire du socle étant assujettie au socle (20) suivant un ajustement glissant.

7. Appareil d'accueil (10) selon la revendication 6, au moins l'un des postes suivants à savoir la partie montage (40) et la section intermédiaire du socle (30) comportant des moyens à action de poussée-déblocage (56) qui dans leur état verrouillé assujettissent la partie montage (40) dans la première position, et dans leur état débloqué permettent un mouvement de pivotement de ladite partie montage (40) par rapport à ladite section intermédiaire du socle (30).

8. Appareil d'accueil (10) selon la revendication 6 ou 7, au moins l'un des postes suivants à savoir la section intermédiaire du socle (30) et la partie volet (44) de la partie montage (40) englobant des moyens de verrouillage (60, 61) en coopération les uns avec les autres, qui facilitent le verrouillage de la partie volet (44) à la section intermédiaire du socle (30), ce qui permet par conséquent d'assujettir la partie montage (40) dans la deuxième position.

9. Appareil d'accueil (10) selon l'une quelconque des revendications 6 à 8, la partie montage (40) étant montée à la fois de façon pivotante et rotative dans ladite section intermédiaire du socle (30).

10. Appareil d'accueil (10) selon l'une quelconque des revendications 1 à 5, la partie montage (40) étant montée à la fois de façon pivotante et rotative dans ladite partie socle (20).

11. Appareil d'accueil (10) selon l'une quelconque des revendications précédentes, des éléments de raccordement (62) en coopération les uns avec les autres, étant prévus sur la face inférieure de la partie couvercle (42) de la partie montage (40), de sorte à permettre au dispositif portable (70) d'être raccordé de façon coulissante à ladite partie couvercle (42) lorsque celle-ci est disposée dans un état vertical quand la partie montage (40) se trouve dans la deuxième position.

12. Appareil d'accueil (10) selon la revendication 11, la partie volet (44) étant pourvue d'au moins une ouverture (50) et d'un connecteur électrique (46) lequel est disposé derrière ladite ouverture (50) de sorte qu'un raccordement coulissant du dispositif portable (70) à celui-ci provoque automatiquement l'alignement du connecteur électrique (46) avec un connecteur correspondant prévu sur le dispositif portable (70) et finalement permet d'obtenir une connexion électrique solide entre ces deux postes.

13. Appareil d'accueil (10) selon l'une quelconque des revendications précédentes, qui englobe des circuits électroniques de conversion de tension.

14. Appareil d'accueil (10) selon l'une quelconque des revendications précédentes, qui englobe en outre un connecteur de bus de données.

15. Appareil d'accueil (10) selon la revendication 14, le connecteur de bus étant un connecteur USB (bus série universel).

16. Appareil d'accueil (10) selon l'une quelconque des revendications précédentes, les éléments de raccordement (62) en coopération les uns avec les autres étant constitués de rails de guidage.
